# EUROPÄISCHE PATENTANMELDUNG

(11) **EP 1 054 205 A2**
(43) Veröffentlichungstag der Anmeldung: **22.11.2000**
(21) Anmeldenummer: 00108828.5
(22) Anmeldetag: 26.04.2000
(51) Int. Cl.: F16L 33/02

(54) **Vorrichtung zur Sicherung und Entsicherung einer Schelle**

(30) Priorität: 15.05.1999 DE 19922260
(71) Anmelder: Rasmussen GmbH, D-63477 Maintal (DE)
(72) Erfinder: Gyöngyösi, Jürgen, 63454 Hanau (DE); Mann, Stephan, 63599 Bieber (DE)
(74) Vertreter: Knoblauch, Andreas, Dr.-Ing.

(57) **Zusammenfassung**

Eine Vorrichtung zur Sicherung und Entsicherung des aufgeweiteten Zustands einer Schelle (1) aus einem ringförmig gebogenen Federstahlelement, das zwei etwa radial abstehende Spannbacken (3, 5) aufweist, hat ein etwa U-förmiges Klammerteil (7), das auf die Spannbakken (3, 5) der aufgeweiteten Schelle (1) aufsetzbar ist. Ferner hat die Vorrichtung ein manuell erfaßbares Griffteil (9), das mit dem Klammerteil (7) durch eine Verbindungseinrichtung (10) verbunden ist. Um ein leichteres Abziehen des Klammerteils (7) von den Spann-backen (3, 5) der aufgeweiteten Schelle (1) zu ermöglichen, hat das Querteil (8) des Klammerteils (7) eine sich quer zur dem Querteil (8) erstreckende, durchge-hende Nut (12) und das Griffteil (9) einen in die Nut (12) passenden Vorsprung (13). Die Verbindungseinrichtung (10) ist derart ausgebildet, daß sie zunächst das Herausziehen des in die Nut (12) eingeführten Vorsprungs (13) aus der Nut (12) und dann das Abziehen des Klammerteils (7) von den Spannbacken (3, 5) zuläßt.

## Beschreibung

Die Erfindung bezieht sich auf eine Vorrichtung zur Sicherung und Entsicherung des aufgeweiteten Zustands einer Schelle aus einem ringförmig gebogenen Federstahlelement, das zwei etwa radial abstehende Spannbacken aufweist, die durch die Federkraft der Schelle unter Verringerung des Schellendurchmessers aus einer auf geweiteten Stellung in eine Schließstellung, in der die Schelle fest am einzuspannenden Gegenstand anliegt, bewegbar sind, mit einem etwa U-förmigen Klammerteil, das auf die Spannbacken der aufgeweiteten Schelle aufsetz-bar ist, und mit einem manuell erfaßbaren Griffteil, das mit dem Klammerteil durch eine Verbindungseinrichtung verbunden ist.

Eine Vorrichtung dieser Art für eine Federbandschelle ist aus der DE 196 41 108 C1 bekannt. Bei dieser Vorrichtung kann das Klammerteil durch Ziehen am Griffteil von den Spannbacken abgezogen werden, um die Schelle in die Schließstellung schnappen zu lassen. Wegen der häufig sehr hohen Federkraft des Federstahlelements, hier des Federstahlbandes, ist mitunter eine erhebliche Abzugskraft erforderlich. Dies ist besonders dann der Fall, wenn die Schenkel des Klammerteils hinterschnitten sind und die Spannbacken die Hinterschneidungen hintergreifen. Gegebenenfalls müßte die Schelle beim Abziehen des Klammerteils noch etwas weiter gegen ihre Federkraft gespannt werden.

Der Erfindung liegt die Aufgabe zugrunde, eine Vorrichtung der eingangs genannten Art anzugeben, die das Abziehen des Klammerteils zur Entsicherung der Schelle erleichtert.

Erfindungsgemäß ist diese Aufgabe dadurch gelöst, daß das Querteil des Klammerteils eine sich quer zu dem Querteil erstreckende, durchgehende Nut aufweist, daß das Griffteil einen in die Nut passenden Vorsprung auf-weist und daß die Verbindungseinrichtung derart ausgebildet ist, daß sie zunächst das Herausziehen des in die Nut eingeführten Vorsprungs aus der Nut und dann das Abziehen des Klammerteils von den Spannbacken zuläßt.

Bei dieser Lösung ist zwar der Querschnitt des Quer-teils (Jochs) des etwa U-förmigen Klammerteils durch die Nut geschwächt. Im aufgeweiteten Zustand der Schelle, in dem das Klammerteil die Spannbacken übergreift, wird jedoch der Vorsprung des Griffteils mittels des Griffteils in die Nut eingeführt. Dabei füllt der Vorsprung die Nut vollständig aus. Das Querteil des Klammerteils kann sich daher auch unter der Federkraft der Schelle praktisch nicht verbiegen. Wenn jedoch durch Ziehen am Griffteil, um den Klammerteil von den Spann-backen abzuziehen, zunächst der in die Nut eingeführte Vorsprung aus der Nut herausgezogen wird, kann sich der Querteil des Klammerteils unter der durch die Federkraft der Schelle über die Spannbacken auf die Schenkel des Klammerteils ausgeübten Kraft um den gleichsam als Filmgelenk wirkenden Boden der Nut herum verbiegen. Durch weiteres Ziehen am Griffteil ist dann das Klammerteil leicht von den Spannbacken zu entfernen, so daß sich die Schelle in die Schließstellung zusammenziehen kann.

Vorzugsweise ist dafür gesorgt, daß die Verbindungseinrichtung ein seitlich von der Nut mit dem Klammerteil verbundenes Gelenk zum Verschwenken des Griffteils mit-samt dem Vorsprung aufweist. Bei dieser Ausbildung wird - beim Abziehen des Klammerteils - bereits während des Herausziehens des Vorsprungs aus der Nut durch die über das Gelenk auf die eine Seite des Klammerteils ausgeübte Kraft ein Drehmoment auf das Klammerteil um eine Achse ausgeübt, die senkrecht zur Ebene der Schelle steht und etwa mit dem freien Ende der einen Spannbacke zusammenfällt, das auf der dem Angriffspunkt des Gelenks am Klammerteil abgekehrten Seite der Nut liegt. Durch dieses Drehmoment wird das Klammerteil um die er-wähnte Achse geschwenkt und von der anderen Spannbacke zumindest teilweise abgehoben. Dadurch wird das Abziehens des Klammerteils von den Spannbacken zusätzlich erleichtert.

Sodann kann das Griffteil auf der dem Gelenk abgekehrten Seite der Nut bei in die Nut eingeführtem Vorsprung des Griffteils mit dem Klammerteil lösbar verbindbar sein. Solange diese lösbare Verbindung besteht, greift der Vorsprung des Griffteils in die Nut ein. Erst nach dem Lösen der Verbindung kann der Vorsprung aus der Nut gezogen werden. Bis dahin sitzt das Klammerteil verhältnismäßig fest auf den Spannbacken auf.

Vorzugsweise ist die lösbare Verbindung in der Weise ausgebildet, daß mit dem Griffteil ein Haken schwenkbar verbunden ist, der bei in die Nut eingeführtem Vorsprung des Griffteils mit einem Vorsprung des Klammer-teils auf der dem Gelenk abgekehrten Seite der Nut in Verriegelungseingrift bringbar ist. Diese Art der lösbaren Verbindung läßt sich leicht durch manuelles Schwenken des Hakens lösen.

Alternativ kann die Verbindungseinrichtung aus beiderseits der Nut mit dem Klammerteil und dem Griffteil verbundenen elastischen Verbindungsgliedern bestehen. Hierbei können sich die Verbindungsglieder beim Abziehen des Klammerteile mittels des Griffteils zunächst so weit elastisch strecken, bis der Vorsprung aus der Nut herausgezogen ist. In der gestreckten Lage der Verbindungsglieder, in der sie sich nicht weiter dehnen lassen, kann dann durch weiteres Ziehen am Griffteil das Klammerteil vollständig unter Verbiegung um den Boden der Nut leicht von den Spannbacken abgezogen werden.

Wenn das eine Verbindungsglied darüber hinaus eine Sollbruchstelle aufweist, würde dieses Verbindungsglied im gestreckten Zustand durch Erhöhung der Abziehkraft zunächst zerreißen. Danach würde dann das Klammerteil durch weiteres Ziehen am Griffteil von den Spannbacken leicht weggeschwenkt.

Der Vorsprung des Griffteil kann ferner mit dem Klammerteil lösbar verrastbar sein. Hierbei würde der Vorsprung auch unter einer etwaigen Federkraft, sei es des Gelenks oder der Verbindungsglieder, die bestrebt ist, den Vorsprung aus der Nut zu heben, so lange sicher in der Nut bleiben, bis am Griffteil gezogen wird.

Eine einfache Herstellung der Vorrichtung ist möglich, wenn das Griffteil und die Verbindungseinrichtung einstückig hauptsächlich aus einem ersten Kunststoff und das Klammerteil hauptsächlich aus einem zweiten, von dem ersten verschiedenen Kunststoff hergestellt ist und das Klammerteil einstückig mit der Verbindungseinrichtung verbunden ist.

Sodann kann das Griffteil zumindest auf seiner dem Klammerteil zugekehrten Seite zum Klammerteil hin gewölbt sein. Dies erleichtert eine Verbiegung des Klammerteils beim Abziehen unter Anlage des Querteils an der Wölbung.

Die Erfindung und ihre Weiterbildungen werden nachstehend anhand der beigefügten Zeichnungen bevorzugter Ausführungsbeispiele näher beschrieben. Es zeigen:
- Fig. 1: eine Seitenansicht eines ersten Ausführungsbeispiels einer erfindungsgemäßen Vorrichtung in einer Lage, in der sie auf Spannbacken ei-ner Schelle aufgesetzt ist,
- Fig. 2: eine Seitenansicht der Vorrichtung nach Fig. 1 in einer Lage, in der sie von den Spannbakken der Schelle abgezogen ist, und
- Fig. 3: eine Seitenansicht eines zweiten Ausführungsbeispiels einer erfindungsgemäßen Vorrichtung in einer Lage, in der sie auf die Spannbacken einer Schelle gemäß Fig. 1 aufgesetzt würde.

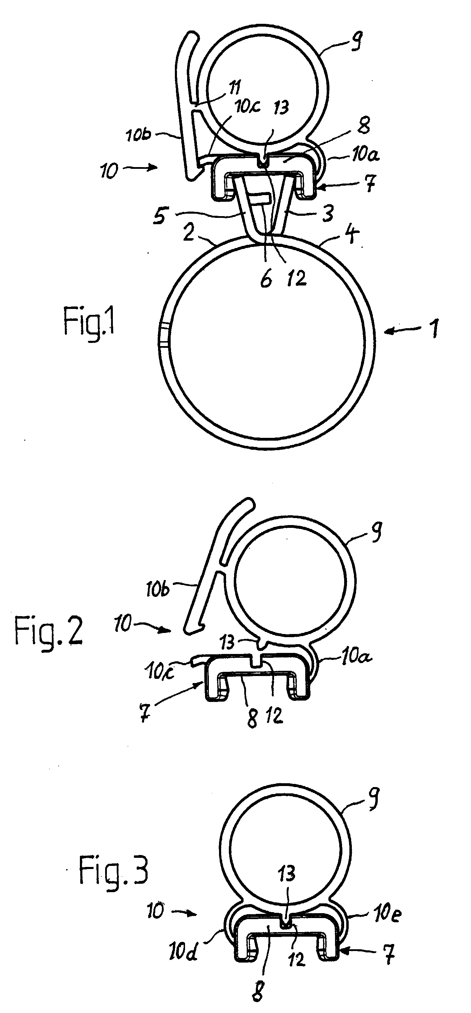

Die in den Fig. 1 und 2 dargestellte Vorrichtung kann bei der in Fig. 1 dargestellten Schelle 1 angewandt werden. Bei der Schelle 1 handelt es sich um eine herkömmliche Federbandschelle zum Festklemmen eines Schlauches auf einem Rohr. Die Schelle 12 besteht aus einem ringförmig gebogenen, bandförmigen Federstahlelement, d.h. einem Federband. Der eine Endabschnitt 2 des Federstahlelements ist mit einer radial abstehenden Spannbacke 3 versehen und ragt durch einen sich in Um-fangsrichtung der Schelle 1 erstreckenden Schlitz im anderen Endabschnitt 4 des Federstahlelements. Dieser Endabschnitt 4 ist ebenfalls mit einer radial abstehenden Spannbacke 5 versehen. Aus dem Schlitz im Bereich der Spannbacke 5 ist eine sich in Richtung auf die an-dere Spannbacke 3 erstreckende Lasche 6 herausgebogen.

Die Schelle 1 ist im dargestellten Zustand durch Zusammendrücken der Spannbacken 3 und 5 gegen die Federkraft des Federelements aufgeweitet beziehungsweise geöffnet, um sie über den Schlauch schieben zu können. Um die Schelle 1 in dem aufgeweiteten Zustand zu halten, bis der Schlauch auf das Rohr geschoben ist, übergreift ein U-förmiges Klammerteil 7 die Spannbacken 3 und 5, so daß sich die Schelle 1 nicht zusammenziehen kann. Das Querteil 8 des Klammerteils 7 ist mit einem ringförmigen Griffteil 9 durch eine Verbindungseinrichtung 10 verbunden. Das Griffteil 9 und die Verbindungseinrichtung 10 sind einstöckig hauptsächlich aus thermoplastischem Kunststoff hergestellt, zum Beispiel aus PA6, das verhältnismäßig leicht biegsam ist. Die Verbindungseinrichtung 10 enthält ein mit dem Klammerteil 7 auf der Außenseite seines einen Schenkels und dem Griffteil 9 einstückig verbundenes Gelenk 10a, etwa in Form eines Filmgelenks, um das Griffteil 9 und das Klammerteil 7 relativ zueinander zu verschwenken. Ferner enthält die Verbindungseinrichtung 10 einen mit dem Griffteil 9 schwenkbar verbundenen Haken 10b und einen an dem vom Gelenk 10a entfernten Ende des Querteils 8 des Klammer-teils 7 angeformten Vorsprung 10c, der mit dem Haken 10b in Verriegelungseingriff bringbar ist. Der Haken 10b ist etwa in der Mitte seiner Länge durch ein biegsames Gelenk mit dem Griffteil 9 verbunden.

Das Querteil 8 des Klammerteils 7 hat etwa in seiner Mitte eine sich quer zu dem Querteil 8 erstreckende, durchgehende Nut 12 und das Griffteil 9 auf seiner zum Klammerteil 7 hin gewölbten Seite einen rippenartigen Vorsprung 13, der in die Nut 12 paßt und sich über deren gesamte Länge erstreckt. Die Tiefe der Nut 12 ist größer als die halbe Dicke des Querteils 8, so daß der Boden der Nut 12 verhältnismäßig dünn und biegsam ist. Das Material des Klammerteils 7 ist jedoch härter als das des Griffteils 9 und der Verbindungseinrichtung 10. Vorzugsweise besteht es aus faserverstärktem Kunst-stoff, bei dem es sich um den gleichen Kunststoff wie dem von Griffteil 9 und Verbindungseinrichtung 10 handeln kann.

Der Vorsprung 13 ist etwas zugespitzt, um ihn leichter in die Nut 12 einführen zu können.

Die Schelle 1 wird vor der Montage auf einem Schlauch zunächst in die geöffnete Lage nach Fig. 1 gebracht. Dabei werden die Spannbacken 3 und 5 mittels eines Werkzeugs aus einer Lage, in der sie einen größeren Abstand voneinander haben und die Schelle 1 entspannt ist, so daß sie einen kleineren Durchmesser aufweist, bis zur Anlage der Lasche 6 an der Spannbacke 3 mittels eines Werkzeugs zusammengedrückt, wobei die Schelle 1 gegen ihre Federkraft aufgeweitet wird. Dann wird das Klammerteil 7 in der entriegelten Lage von Haken 10b und Vorsprung 10c nach Fig. 2 auf die Spannbacken 3, 5 gesetzt, so daß die Spannbacken 3, 5 die dargestellte Lage beibehalten und mithin die Schelle 1 im geöffneten Zustand gehalten wird. Anschließend wird das Griffteil 9 so weit um das Gelenk 10a zum Querteil 8 des Klammer-teils 7 hin geschwenkt, bis der Vorsprung 13 des Griff-teils 9 in die Nut 12 eingreift und das Griffteil 9 am Querteil 8 anliegt. Gleichzeitig rastet der Haken 10b bei dieser Schwenkbewegung unter dem Vorsprung 10c in der Verriegelungslage gemäß Fig. 1 ein. In diesem Zustand wird die Schelle 1 über einen Schlauch geschoben, dessen Außendurchmesser kleiner als der Innendurchmesser der geöffneten Schelle 1, jedoch etwas größer als der Innendurchmesser der Schelle 1 in ihrem völlig entspannten Zustand ist. Auf dem Schlauch wird die geöffnete Schelle 1 an der gewünschten Stelle befestigt, z.B. an einer den Spannbacken 3, 5 gegenüberliegenden Stelle angeklebt. Sodann werden Schlauch, Schelle 1 und die aus dem Klammerteil 7, dem Griffteil 9 und der Verbindungseinrichtung 10 bestehende Vorrichtung in der vormontierten Lage zu Einbaustelle des Schlauches, z.B. von einem Schlauchhersteller zu einem Kraftfahrzeughersteher, transportiert, um den Schlauch beispielsweise am Anschlußstutzen eines Kraftfahrzeugkühlers zu befestigen. Dort wird der Schlauch auf das Rohr beziehungsweise den Rohrstutzen geschoben und dann das Klammer-teil 7, nach dem Entriegeln von Haken 10b und Vorsprung 10c und Einhaken eines Fingers im Griffteil 9, von den Spannbacken 3, 5 abgezogen. Die Schelle 1 zieht sich darauf hin fest um den Schlauch zusammen und klemmt ihn am Rohr fest.

Beim Abziehen des Klammerteils 7 mittels des Griffteils 9 von den Spannbacken 3, 5 wird zunächst der Vorsprung 13 aus der Nut 12 gezogen, indem auf den Griffteil 9 eine radial oder schräg zum Querteil 8 zu der in den Fig. 1 und 2 rechten Seite des Querteils 8 gerichtete Kraft ausgeübt wird. Hierbei nimmt die Sicherungs- und Entsicherungsvorrichtung die in Fig. 2 dargestellte Lage ein. Anschließend wird das Griffteil 9 weiter radial in bezug auf die Schelle 1 von dieser weggezogen. Dabei wird über das Gelenk 10a ein Drehmoment entgegen dem Uhrzeigersinn in Fig. 1 auf das Klammerteil 7 ausgeübt, das eine Drehung des Klammerteils 7 um eine Achse bewirkt, die senkrecht zur Papierebene beziehungsweise der Ebene der Schelle 1 steht und etwa mit dem freien Ende der Spannbacke 5 zusammenfällt. Bei dieser Drehung, die auch schon einsetzen kann, bevor der Vor-sprung 13 vollständig aus der Nut 12 herausgezogen ist, wird zunächst der in Fig. 1 rechte Schenkel, an dessen Außenseite das Gelenk 10a angeformt ist, von der Spann-backe 3 weggeschwenkt und gleichzeitig, sobald der Vorsprung 13 hinreichend weit aus der Nut 12 herausgezogen ist, das Querteil 8 etwas um den Boden der Nut 12 herum gebogen. Dadurch läßt sich das Klammerteil 7 leicht, auch bei etwas hinterschnittenen Innenseiten der Schenkel des Klammerteils 7, von den Spannbacken 3, 5 weg-schwenken.

Das Ausführungsbeispiel nach Fig. 3 unterscheidet sich von dem nach Fig. 1 nur dadurch, daß die Verbindungseinrichtung 10 aus zwei beiderseits der in der Mitte des Querteils 8 ausgebildeten Nut 12 mit dem Klammerteil 7 an der Außenseite seiner Schenkel und dem Griffteil 9 einstückig verbundenen elastischen Verbindungsgliedern 10d und 10e besteht. Die Verbindungsglieder 10d und 10e sind ebenso wie das Gelenk 10a bei der Aus-führungsform nach den Fig. 1 und 2 ausgebildet, d.h. bogenartig nach außen gewölbt und elastisch biegsam, doch wirken sie in diesem Falle weniger als Gelenk, sondern mehr als Federelemente. So werden die Verbindungsglieder 10d und 10e - nach dem Aufsetzen des Klammerteils 7 auf die Spannbacken 3, 5 der gespannten Schelle 1 - durch in bezug auf die Schelle 1 radiales Ziehen am Griffteil 9 gestreckt und dabei der Vorsprung 13 aus der Nut 12 herausgezogen. Unter Fortsetzung der auf das Griffteil ausgeübten Zugkraft wird schließlich die volle Zugkraft auf das Klammerteil 7 ausgeübt. Da-bei verbiegt sich das Klammerteil 7 um den Boden der Nut 12, da es nicht mehr durch den Vorsprung 13 an dieser Biegung gehindert wird. Die Schenkel des Klammer-teils 7 weiten sich mithin auf, so daß es leicht von den Spannbacken 3, 5 abgezogen werden kann.

Eine Abwandlung der dargestellten Ausführungsbeispiele kann beispielsweise darin bestehen, daß die Nut 12 in ihren Seiten mit leichten Vertiefungen versehen wird, in die kleine seitliche Vorsprünge des Vorsprungs 13 beim Zusammendrücken von Griffteil 9 und Klammerteil 7 einrasten können. Dadurch wird ein selbsttätiges Ausweichen des Vorsprungs 13 aus der Nut 12, beispielsweise unter einer sich beim Formen des Gelenks 10a beziehungsweise der Verbindungsglieder 10d, 10e ergebenden Vorspannung, verhindert, bevor mit der Hand am Griff-teil 9 gezogen wird. Eine ähnliche Rastverbindung von Griffteil 9 und Klammerteil 7 kann dadurch erreicht werden, daß der Vorsprung 13 mit einer Verlängerung versehen wird, deren freies Ende als verdickter Kopf, z.B. Kugel oder Doppelkegel, ausgebildet ist, der durch ein etwas engeres Loch im Boden der Nut 12 hindurchdrückbar ist und hinter dem Rand des Loches an der Unterseite des Bodens einrasten kann. Eine weitere Abwandlung kann darin bestehen, daß bei dem Ausführungsbeispiel nach Fig. 3 das eine der beiden Verbindungsglieder 10d, 10e, z.B. das Verbindungsglied 10d, mit einer Sollbruchstelle versehen wird, die zuerst reißt, wenn am Griffteil 9 gezogen wird, bevor das Klammerteil 7 von den Spannbacken 3, 5 abhebt. Dadurch läßt sich auch bei dem Ausführungsbeispiel nach Fig. 3 über das nicht gerissene Verbindungsglied eine Schwenkbewegung auf das Klammerteil 7 wie bei dem Ausführungsbeispiel nach den Fig. 1 und 2 ausüben.

## Patentansprüche

1. Vorrichtung zur Sicherung und Entsicherung des aufgeweiteten Zustands einer Schelle (1) aus einem ringförmig gebogenen Federstahlelement, das zwei etwa radial abstehende Spannbacken (3, 5) aufweist, die durch die Federkraft der Schelle (1) unter Verringerung des Schellendurchmessers aus einer aufgeweiteten Stellung in eine Schließstellung, in der die Schelle fest am einzuspannenden Gegenstand anliegt, bewegbar sind, mit einem etwa U-förmigen Klammerteil (7), das auf die Spannbacken (3, 5) der aufgeweiteten Schelle (1) aufsetzbar ist, und mit einem manuell erfaßbaren Griffteil (9), das mit dem Klammerteil (7) durch eine Verbindungseinrichtung (10) verbunden ist, dadurch gekennzeichnet, daß das Querteil (8) des Klammerteils (7) eine sich quer zur dem Querteil (8) erstreckende, durchgehende Nut (12) aufweist, daß das Griffteil (9) einen in die Nut (12) passenden Vorsprung (13) aufweist und daß die Verbindungseinrichtung (10) derart ausgebildet ist, daß sie zunächst das Herausziehen des in die Nut (12) eingeführten Vorsprungs (13) aus der Nut (12) und dann das Abziehen des Klammerteils (7) von den Spannbacken (3, 5) zuläßt.

2. Vorrichtung nach Anspruch 1, dadurch gekennzeichnet, daß die Verbindungseinrichtung (10) ein seitlich von der Nut (12) mit dem Klammerteil (7) verbundenes Gelenk (10a) zum Verschwenken des Griff-teils (9) mitsamt dem Vorsprung (13) aufweist.

3. Vorrichtung nach Anspruch 2, dadurch gekennzeichnet, daß das Griffteil (9) auf der dem Gelenk (10a) abgekehrten Seite der Nut (12) bei in die Nut (12) eingeführtem Vorsprung (13) des Griff teils (9) mit dem Klammerteil (7) lösbar verbindbar ist.

4. Vorrichtung nach Anspruch 2 oder 3, dadurch gekennzeichnet, daß mit dem Griffteil (9) ein Haken (10b) schwenkbar verbunden ist, der bei in die Nut (12) eingeführtem Vorsprung (13) des Griffteils (9) mit einem Vorsprung (10c) des Klammerteils (7) auf der dem Gelenk (10a) abgekehrten Seite der Nut (12) in Verriegelungseingriff bringbar ist.

5. Vorrichtung nach Anspruch 1, dadurch gekennzeichnet, daß die Verbindungseinrichtung (10) aus beiderseits der Nut (12) mit dem Klammerteil (7) und dem Griffteil (9) verbundenen elastischen Verbindungsgliedern (10d, 10e) besteht.

6. Vorrichtung nach Anspruch 5, dadurch gekennzeichnet, daß das eine Verbindungsglied (10d) eine Sollbruchstelle aufweist.

7. Vorrichtung nach einem der Ansprüche 1 bis 6, dadurch gekennzeichnet, daß der Vorsprung (13) des Griffteils (9) mit dem Klammerteil (7) lösbar verrastbar ist.

8. Vorrichtung nach einem der Ansprüche 1 bis 7, dadurch gekennzeichnet, daß das Griffteil (9) und die Verbindungseinrichtung (10) einstückig hauptsächlich aus einem ersten Kunststoff und das Klammer-teil (7) hauptsächlich aus einem zweiten, von dem ersten verschiedenen Kunststoff hergestellt ist und das Klammerteil (7) einstückig mit der Verbindungseinrichtung (10) verbunden ist.

9. Vorrichtung nach einem der Ansprüche 1 bis 8, dadurch gekennzeichnet, daß das Griffteil (9) zumindest auf seiner dem Klammerteil (7) zugekehrten Seite zum Klammerteil (7) hin gewölbt ist.
